# EUROPEAN PATENT SPECIFICATION

(11) **EP 1 073 193 B1**
(45) Date of publication and mention of the grant of the patent: **06.04.2005**
(21) Application number: 00115629.8
(22) Date of filing: 20.07.2000
(51) Int. Cl.: H02P 21/00

(54) **Method of control for sensorless induction motor drives**
Steuerverfahren eines sensorlosen Induktionsmotors
Méthode de contrôle d'un moteur à induction sans capteur

(30) Priority: 29.07.1999 IT TO990669; 09.02.2000 US 501056
(43) Date of publication of application: 31.01.2001
(73) Proprietor: Universita' Degli Studi Di Catania, 95100 Catania (IT)
(72) Inventor: Consoli, Alfio, 95100 Catania (IT); Scarcella, Guiseppe, 98023 Furci Siculo (ME) (IT); Testa, Antonio, 95024 Acireale (CT) (IT)
(74) Representative: Lotti, Giorgio

(56) References cited:
- EP-B- 0 579 694
- DE-A- 4 413 809
- US-A- 4 445 080
- US-A- 5 254 918
- US-A- 5 559 419
- SCHRODL M: "SENSORLESS CONTROL OF PERMANENT-MAGNET SYNCHRONOUS MACHINES AT ARBITRARY OPERATING POINTS USING MODIFIED INFORM FLUX MODEL" , EUROPEAN TRANSACTIONS ON ELECTRICAL POWER ENGINEERING XP000398518 * paragraph [03.1]; figure 2 * * paragraph [04.1] *
- JIANG J ET AL: "SPEED SENSORLESS AC DRIVE FOR HIGH DYNAMIC PERFORMANCE AND STEADY STATE ACCURACY" PROCEEDINGS OF THE INTERNATIONAL CONFERENCE ON INDUSTRIAL ELECTRONICS,CONTROL, AND INSTRUMENTATION (IECON),US,NEW YORK, IEEE, vol. CONF. 21, 6 November 1995 (1995-11-06), pages 1029-1034, XP000559336 ISBN: 0-7803-3027-7
- RIBEIRO L A S ET AL: "COMPARISON OF CARRIER SIGNAL VOLTAGE AND CURRENT INJECTION FOR THE ESTIMATION OF FLUX ANGLE OR ROTOR POSITION" CONFERENCE RECORD OF THE IEEE INDUSTRY APPLICATIONS CONFERENCE. IAS ANNUAL MEETING,US,NEW YORK, NY: IEEE, 12 October 1998 (1998-10-12), pages 452-459, XP000804011 ISBN: 0-7803-4944-X

## Description

The present invention relates to The present invention refers to a control method for sensorless drives with induction motors.

Currently induction motor drives are widely used in electric traction systems and in several industrial applications, such as machine tools, pumps, conveyor belts and others, wherein they are progressively replacing the traditional direct current motor drives, thanks to their improved robustness, reduced maintenance and to the lower production costs.

According to their dynamic performance, induction motor drives, may be divided into two categories: low performance drives and high performance drives.

In low performance induction motor drives speed regulators may be open-loop type (constant Volt/Hertz technique) or closed-loop type (slip control technique), while flux and torque control are performed by scalar control approaches, acting only on the amplitude of the electric variables. Such scalar control approaches require the knowledge of the amplitude of the stator flux in order to determine the stator voltage as function of the frequency and the speed.

In high performance induction motor drives speed and position controllers are of the closed loop type, while flux and torque control are performed by vector control approaches, acting on both the amplitude and the angular position of the rotating vectors representing the electric variables. Among induction motor vector control techniques, field orientation is today the most widely diffused approach. It performs an independent regulation of flux and torque by acting on the stator current components according to a two phase rotating reference frame, synchronous with the rotor flux. Control techniques based on the field orientation principle require the knowledge of both the amplitude and the angular position of the rotor flux.

The amplitude and the angular position of both the stator flux and the rotor flux can be obtained from the amplitude and the angular position of the airgap flux by adding proper corrective terms depending on the stator current and the induction machine parameters.

The amplitude and the angular position of the airgap flux could be, in theory, directly measured using Hall effect flux sensors. Such sensors, however, do not provide in practice the required precision; further, their instalment inside the machine is often complex.

In low performance drives, rather than measuring the amplitude of the airgap flux, an approximated constant value is instead used. In high performance drives, based on the field orientation principle, the amplitude and the position of the rotor flux can be determined directly from measured stator voltages and currents (direct field orientation) or, more commonly, in an indirect way, by means of a mathematical model of the motor (indirect field orientation). This last technique is, by far, the most used, even though it requires an angular position transducer of the machine shaft, with a resolution equal at least to 8 bits, and although the so obtained results are extremely sensitive to rotor resistance variations caused by the temperature.

Sensitivity to parameter variation and the need to introduce within the drive a relatively expensive position sensor, have initiated the development of alternative techniques, of the "sensorless" type, suitable to determine the amplitude and the angular position of the rotor flux without using a position transducer.

The most common sensorless control techniques are based on the direct field orientation approach, wherein the amplitude and the angular position of the rotor flux are obtained from the back electromotive force (EMF). Techniques based on such a principle can be easily implemented at a low cost, but they fail at low stator voltage frequencies.

The lack of a correct estimation of the amplitude and/or the angular position of the airgap flux at low frequency causes strong restrictions to induction motor drives operations at low speed as well as at locked rotor.

More sophisticated sensorless type control techniques, based on injecting suitable test signals and on measuring the high frequency current harmonics allow to noticeably reduce the minimum motor speed allowed by the control; however also such techniques do not completely solve the problem of torque and flux control at very low or zero speeds.

On this regard, it has to be noted that the motor control at very low or zero speed is required very frequently and, in particular, it is useful in electric traction applications, in robotics, in many machine tools of the new generation, and, in general, in all those applications where it is required to balance a load at standstill or to bring a shaft back to a given position.

A method for controlling an induction motor is known from US 5 559 419.

A purpose of the present invention is therefore to realize a control system for low performance induction motor drives able to overcome the above mentioned disadvantages and, in particular, to define a control system to realise "sensorless type" electrical drive means, based on the constant Volt/Hertz technique, or on the slip control technique, able to properly work at very low speeds or even at zero speed.

Another purpose of the present invention is to realize a control system for high performance induction motor drives able to overcome the above mentioned disadvantages and, in particular, to define a control system to realise "sensorless type" electrical drive means, based on the direct field orientation approach, able to properly work at very low speeds or even at zero speed.

Another purpose of the present invention is to define a method for the measurement of the amplitude and/or the angular position of the airgap flux in induction motor drives, able to properly work at any stator voltage frequency and, in particular, at very low and zero frequency.

Another purpose of the present invention is to indicate a system for the measurement of the amplitude and/or the angular position of the airgap flux, to be used in the realisation of high performance and low performance sensorless induction motor drives.

A further purpose of the present invention is to define some control schemes for induction motor drives using said method and system of measurement, able to correctly work at very low and zero speed, irrespectively from load changes. Moreover, to indicate some exemplary implementation schemes using conventional circuits and computing devices easy to install and to use, at low costs compared to standard techniques and in consideration of the attained advantages.

According to the present invention, those purposes are achieved by the method of claim 1.

Further object, features and advantages of the induction motor drives realised according to the invention, will be better understood from the following detailed description, relative to an example of a preferred and explanatory, non limiting, implementation which refers to the accompaning attached schematic drawings, wherein:
- figure 1 shows the relationships between the third harmonic flux path and the airgap flux of an induction motor;
- figure 2 shows the relationships between the amplitude of the zero sequence stator voltage component generated by the interaction between the main rotating field and a suitable high frequency magnetic field, and the amplitude of the airgap flux.
- figure 3 is a schematic diagram of a first exemplary sensorless control system for low performance induction motor drives, where the amplitude of the airgap flux is estimated according to the present invention.
- figure 4 is a schematic diagram of a first exemplary sensorless control system for high performance induction motor drives, where the angular position of the airgap flux is estimated according to the present invention.
- figure 5 is a schematic diagram of a first exemplary sensorless control system for high performance induction motor drives, where the amplitude and the angular position of the airgap flux are estimated according to the present invention.

With reference to the above mentioned figures, T3 indicates the third harmonic component of the airgap flux TF, BS indicates the feeding bus of the inverter PWM, ST1, ST2, ST3 indicate the windings of the three phases of the stator ST of the electric machine, TV indicates a voltage transducer, TA a current transducer, PB indicates a band-pass filter, EB indicates a notch filter, CA indicates an electronic device, or a software procedure, to evaluate the amplitude FA of the airgap flux TF, CP indicates an electronic device ,or a software procedure, to evaluate the angular position FP of the airgap flux TF, RC indicates a stator current control system, while B0 indicates an electronic device, or a software procedure, to perform the machine control according to the constant Volt/Hertz technique, and XF indicates an electronic device, or a software procedure, to perform the machine control according to the field orientation principle.

### DETAILED DESCRIPTION OF THE INVENTION

Induction motors, in normal operating conditions and rated flux, work in the bend area of the curve B-H of the ferromagnetic material which represents the core; further, the ferromagnetic core of the machine is more saturated along the flux direction.

As a consequence, the saturation causes a local anisotropy of the induction machine which, by itself, has a non salient magnetic structure.

The space distribution of the airgap flux TF is not perfectly sinusoidal, due to saturation, with a harmonic content characterised by the presence of odd and zero sequence harmonics, but strongly influenced by the third harmonic component T3. The third harmonic T3 of the flux at the air gap TF induces, in the three phases F1, F2, F3 of the stator windings ST1, ST2, ST3, three third harmonic voltages V31, V32, V33, which are in phase among them, and form a zero sequence three phase voltage.

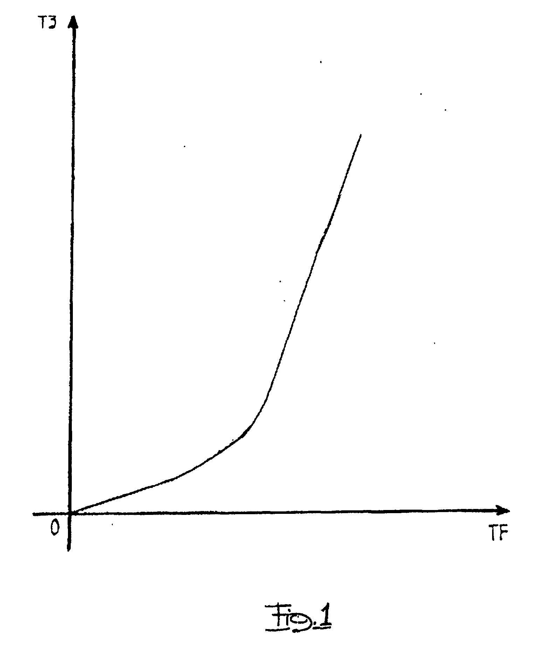

Variation of the third harmonic flux T3 as a function of the main flux TF can be determined experimentally and is not linear, as shown in figure 1.

If a direct or an inverse set of high frequency three-phase voltages VHF is added to the stator three-phase voltage, a high frequency rotating magnetic field will be produced, which interacts with the main magnetic field.

The high frequency rotating field produces a change of the saturation level of the magnetic circuit of the machine which is a function of the position taken during its rotation; in particular, the saturation level will be maximum when such a high frequency field will be aligned and phased with the main field, it will be at the value determined only by the main airgap flux when the high frequency field is in quadrature with the main field, and finally it will be minimum when the high frequency flux is aligned in counter-phase with the main field.

Because of the periodic change of saturation, due to interaction between the main field and the high frequency field, the zero sequence component of the flux at the air gap TF, usually characterised by the presence of the third harmonic component T3, also includes a high frequency harmonic FOA at a frequency equal to the difference between the frequency of the additional voltage VHF and the frequency of the main rotating magnetic field. Moreover, maximum and minimum points in the waveform of FOA, respectively correspond to maximum and minimum values of the saturation level, that, in turn, occur when respectively the high frequency field is aligned in phase and in phase opposition with the main rotating field. Since the high frequency flux is 90° leading the additional high frequency voltage VHF, it is possible to univocally determine the angular position FP of the airgap flux TF, from the known angular position of the voltage VHF, at the time instants in which maximum, minimum and zero points of FOA take place.

The fact that the relation between the airgap flux and its third harmonic component is not linear, as it is shown in Fig.1, provides to enhance the phenomenon, thus making significant the high frequency harmonic of the flux and able to induce a zero sequence high frequency voltage component VOA, having the same frequency of FOA, superimposed to the third harmonic voltages V31, V32, V33.

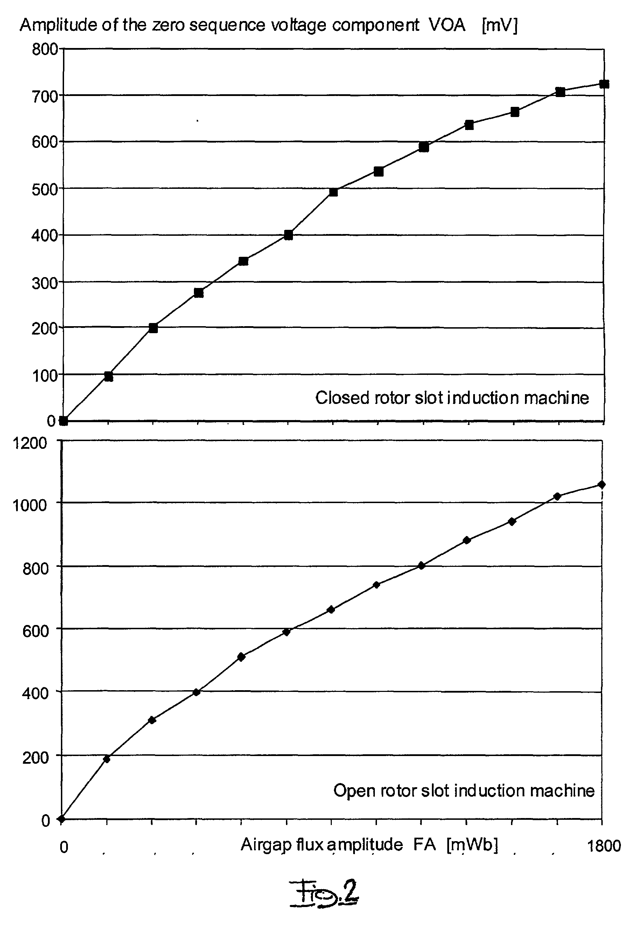

The amplitude of the zero sequence voltage harmonic VOA is strictly proportional to the amplitude of the zero sequence airgap flux component FOA, and related to the amplitude of the airgap flux TF by mean of the function drawn in Fig. 2. Moreover VOA is 90° leading the zero sequence airgap flux component FOA, thus the position FP of the airgap flux TF can be also univocally determined, from the known angular position of the voltage VHF, at the time instants in which maximum, minimum and zero points of VOA take place.

If the zero sequence path is closed through the ground, then also a high frequency zero sequence component IOA of the stator current is generated, having the same frequency of the zero sequence airgap flux component FOA. Due to the features of the high frequency zero sequence current path, the amplitude of the zero sequence current component IOA is proportional to the amplitude of the zero sequence voltage component VOA. Moreover, a constant phase displacement exists between IOA and VOA, enabling the determination of the angular position FP of the airgap flux TF, from the known angular position of the voltage VHF, at the time instants in which maximum, minimum and zero points of IOA take place.

These results can also be obtained by introducing a direct or inverse symmetric set of three high frequency currents or by introducing a high frequency voltage or current component along the direction of the airgap flux TF.

The third harmonic phase voltages V31, V32, V33 and the high frequency zero sequence harmonic components can be picked up directly between the terminals of the stator ST and the star centre N of the stator windings, without any significant phase error. Then, the total zero sequence voltage VSM can be obtained by adding the three phase voltages of the machine at any time instant.

Alternatively, the global zero sequence voltage VSM can be picked up between the star centre N of the stator windings ST1, ST2, ST3 and the central point O of the capacitors C1, C2 of the direct current bus BS, which feeds the inverter PWM with width impulse modulation.

If the star centre N of the stator windings ST1, ST2, ST3 is not accessible, then a voltage proportional to the global zero voltage VSM can be picked up between a fictitious star centre NF, obtained by connecting a star of three equal impedances in any point of the cable connecting the inverter at the machine, and the central point O of the capacitors C1, C2 of the direct current bus BS, which feeds the inverter PWM.

A further alternative is to measure the total zero sequence current ISM.

The third harmonic component of the zero sequence voltage VSM, which is the output of the voltage transducer TV, or of the zero sequence current ISM, is eliminated by a band-pass filter PB that also eliminates further high frequency harmonics, as those produced by the inverter PWM and by the rotor slots, as well as high frequency noises.

The amplitude FA of the airgap flux TF is obtained, using a computing device CA, from the amplitude of the voltage VOA, that is the output of the band-pass filter PB, according to the experimental function shown in Fig. 2.

The angular position FP of the airgap flux TF is obtained, using a computing device CP, from the known angular position of the voltage VHF, by detecting the maximum, minimum and zero points of the voltage VOA.

Alternatively, the angular position FP of the airgap flux TF can be obtained, using a suitable computing device, by integration of the difference between the known angular speed of the voltage VHF and the measurable angular speed of the zero frequency voltage component VOA.

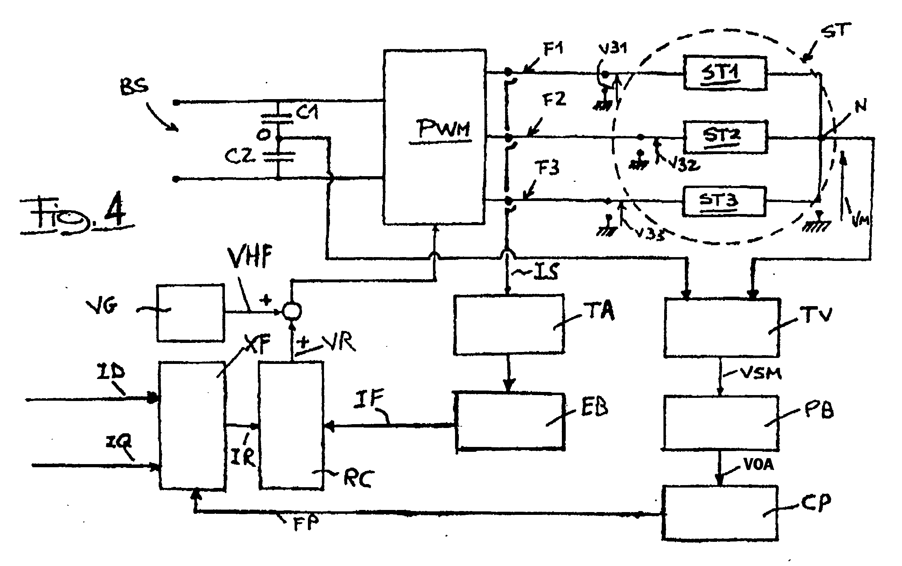

A high performance induction motor drive, according to the present invention, can be experimentally implemented in a simple and inexpensive way, as the one illustrated in the schematic diagram of figure 4, that exploits the method and the system for the measurement of the angular position of the airgap flux, according to the present invention.

The injection of the set of three high frequency voltages VHF, the measurement of the zero sequence component VSM from the stator voltages V31, V32, V33, the filtering operation of the high frequency harmonics, the measurement of the maximum, minimum and zero points, using the computing device CP, can be carried out utilizing low cost analogue circuits and there are various schemes which can be realised, as the one of figure 4, which represents a non limiting example of embodiment of the system according to the invention. Note that in such a scheme also the block XF is shown, which performs the field oriented control of the motor in a predetermined reference system, as well as the block RC that performs the stator current control.

In particular, the voltage VOA is obtained by measuring, through the transducer TV, the voltage VS1 between the star centre N of the stator windings ST1, ST2, ST3 and the central point O of the capacitors C1, C2 of the direct current bus BS of the inverter PWM.

The signal VSM obtained at the output of TV is then filtered and amplified in order to achieve a good signal/noise ratio. The block CP performs the estimation of the angular position of the airgap flux according to the invention.

The estimated airgap flux angular position FP is then sent to the block XF performing the field orientation. The block XF receives as inputs the reference stator current components ID and IQ, then it makes a transformation from the two phase rotating reference frame synchronous with the flux, to a three phase fixed reference system, in order to generate the stator current reference IR.

The actual stator current is measured by the current transducer TA, while the notch filter EB is used to eliminate the high frequency components in the current feedback loop.

The current regulator device RC manages the reference stator voltage VR in order to minimise the error between the reference stator current IR and the feedback signal IF.

The stator reference voltage VR is then added to the high frequency component VHF and, finally, sent to the inverter PWM.

From the given description, the system characteristics and the method of control for an induction motor drive, which are the object of the present invention, are clearly defined, as well as the advantages.

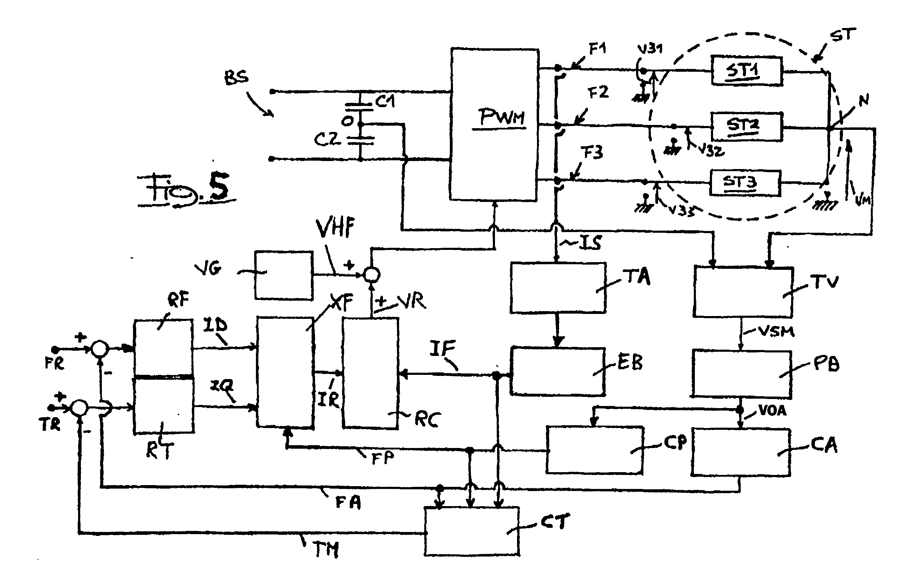

An alternative scheme for high performance induction motor drives, according to the present invention, can be experimentally implemented in a simple and inexpensive way, as the one illustrated in the schematic diagram of figure 5, which represents a non limiting example of embodiment of the system according to the invention, that exploits the method and the system for the measurement of the amplitude and the angular position of the airgap flux object of the present invention.

If compared with the scheme of Fig. 4, in the scheme of Fig. 5 it is evident the presence of the block CA that determines the amplitude FA of the airgap flux vector TF from the amplitude of the voltage VOA, according to the function shown in Fig. 2. A further difference consists in the presence of the block CT that estimates the electromagnetic torque TM according to the actual values of the stator current IF, as well as the amplitude FA and the angular position FP of the airgap flux. The knowledge of the actual values of the motor torque and flux allows to perform a closed loop control of such variables, by means of the torque regulator RT and the flux regulator RF. Such blocks generates the reference values ID and IQ of the stator current components according to a rotating reference frame synchronous with the flux, that in the scheme of Fig. 4 were imposed by an external device.

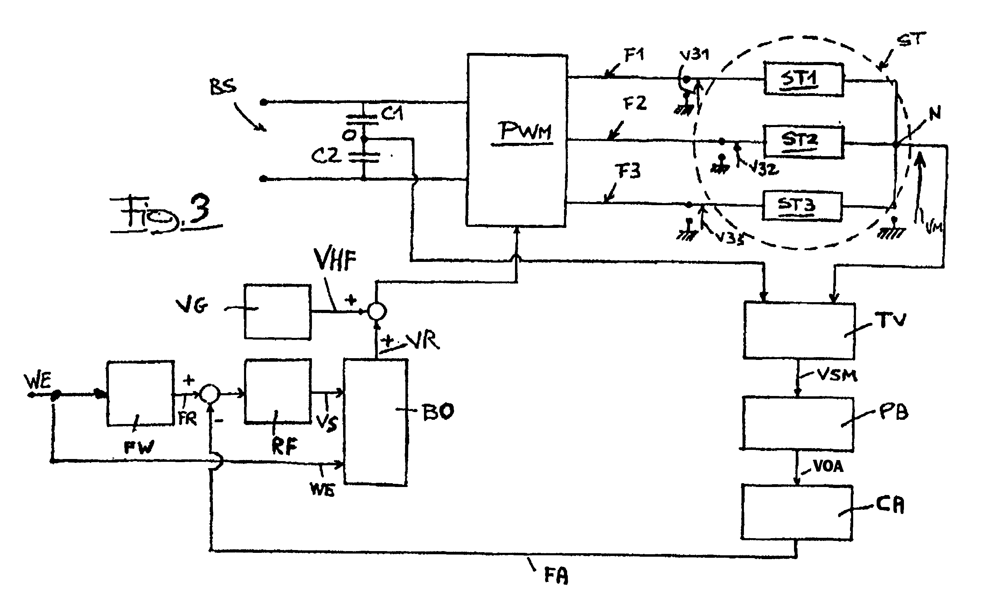

A low performance induction motor drive, according to the present invention, can be also experimentally implemented in a simple and inexpensive way, as the one illustrated in the schematic diagram of figure 3, which represents a non limiting example of embodiment of the system according to the invention, that exploits the method and the system for the measurement of the amplitude of the airgap flux object of the present invention.

If compared with the schemes of Fig. 4 and Fig. 5, in the scheme of Fig. 3 are not included the blocks that perform the torque control (CT, RT), the field orientation (XF), the stator current control (TA, EB, RC) and the estimation of the angular position of the airgap flux (CP). The control of the amplitude of the airgap flux is performed by mean of the flux regulator RF that generates the stator voltage amplitude reference value VS, in order to minimise the error between the flux reference FR and the estimated flux amplitude FA. Finally the inverter PWM reference signal VR is generated by the block BO according, for example, to a constant volt/hertz technique.

## Claims

1. A control method for electric drive means with induction motors, wherein said induction motor includes a stator (ST) with a plurality of stator windings (ST1, ST2, ST3) thereon, a rotor mounted for rotation within the stator (ST) and a ferromagnetic core, said method comprising the steps of operating said motor with a main magnetic field in condition of magnetic saturation, with an air-gap flux (TF) having a space distribution with a harmonic content including at least one harmonic component (T3), which induces, in said stator windings (ST1, ST2, ST3), harmonic phase voltages (V31, V32, V33) forming a zero sequence stator voltage (VSM) or current (ISM), superposing to said main rotating magnetic field a high frequency rotating magnetic field generated by adding a set of direct or inverse symmetric high frequency voltages (VHF) or currents (IHF) to standard stator phase voltages of the motor, thereby causing variation of the saturation level of the ferromagnetic core of said induction motor and generating a high frequency zero-phase sequence component (T3) of the air-gap flux (TF), which induces, in said stator windings (ST1, ST2, ST3), high frequency zero sequence voltage (VSM) or current (ISM) harmonic components, said high frequency zero sequence voltage (VSM) or current (ISM) components being functions of the relative positions taken by said additional set of high frequency voltages (VHF) or currents (IHF) and said main rotating magnetic field (MRF), so that when said additional set of voltages (VHF) or currents (IHF) is in phase with the main rotating magnetic field (MRF), a maximum of the saturation level of the ferromagnetic core of the motor takes place, causing the occurrence of a local minimum on said high frequency zero-phase sequence component (T3) of the air-gap flux (TF), that is reflected as a local maximum on said induced high frequency zero-phase sequence stator voltage (VSM) or current (ISM) components; the method being further **characterized in**:
- detecting the zero sequence voltage or the zero voltage current,
- measuring the angular position and/or the amplitude of the air gap main magnetic flux from the high frequency zero sequence voltage or current harmonic components.

2. A control method as claimed in claim 1, **characterised in that** it further comprises the step of filtering and amplifying said zero-phase sequence stator voltage (VSM) with means for filtering and amplifying, so as to obtain a ratio between signal and noise, and using a notch filter (EB), which is connected to a first signal processing and control block (RC) to eliminate undesirable high frequency components from a feedback loop (FA, FP) of current signals.

3. A control method as claimed in claim 2, **characterised in that** said feedback loop (FA, FP) comprises at least one control device (RF) of said current signals, which sends a reference signal (VS) to a second processing and control block (BO), so as to generate a reference value (VR), with respect to a fixed axis system, and an electronic device of an inverter type (PWM), which receives said reference value (VR) added together with said set of high frequency voltages (VHF).

4. A control method as claimed in claim 3, **characterised in** the step of adding said set of high frequency voltages (VHF) to a voltage reference signal (VR) or to an output of said current control device (RF).

5. A control method as claimed in claim 1, **characterised by** comprising a step of measuring the amplitude of a component (VOA) of said high frequency zero-phase sequence stator voltage (VSM) having a frequency equal to the difference between the frequency of said additional magnetic field, generated by said additional set of high frequency voltages (VHF), and the frequency of said main rotating magnetic field (MRF) and a step of determining the amplitude of an air-gap flux component (FOA) from the amplitude of said component (VOA) of the high frequency zero-phase sequence stator voltage (VSM).

6. A control method as claimed in claim 5, **characterised in that** the angular position of said air-gap flux (TF) is determined by integrating the difference between the angular frequency of said additional set of high frequency voltages (VHF) and said zero-phase sequence stator voltage (VSM) having a frequency equal to the difference between the frequency of said additional 1 magnetic field and the frequency of said main rotating magnetic field.

7. A control method as claimed in claim 5, **characterised in that** the angular position of said air gap flux (TF) is determined by detecting the angular position of said additional set of high frequency voltages (VHF) in the time instants in which maximum, minimum and zero points occur in said zero-phase sequence stator voltage (VSM) having a frequency equal to the difference between the frequency of said additional magnetic field generated by said additional set of high frequency voltages (VHF) and the frequency of said main rotating magnetic field.

8. A control method as claimed in claim 5, **characterised in that** a total zero-phase sequence stator voltage (VSM), including a third harmonic voltage component and high frequency harmonic components, is obtained as an arithmetical mean of said harmonic phase voltages (V31, V32, V33), said total zero-phase sequence stator voltage (VSM) being obtained by measuring a voltage between a star centre (N) of stator windings (ST1, ST2, ST3) and a central point (O) positioned between two capacitors (C1, C2) connected along a direct current electric line (BS), which feeds an electronic device of the inverter type (PWM).

9. A control method as claimed in claim 8, **characterised in that** a total zero-phase sequence stator current (ISM) is directly determined through suitable sensors or indirectly determined through the measure of a zero-phase sequence voltage drop in any of the points of a connection line between said electronic device of the inverter type (PWM) and the electric motor, said voltage drop being measured by determining the voltage taken between a star centre (NF), obtained by connecting a three impedance star through a shunt to the supply conductors of the motor, and a central point (O) positioned between two capacitors (C1, C2) connected along a direct current electric line (DC) which feeds said electronic device of the inverter type (PWM).

## Patentansprüche

1. Verfahren zum Steuern von Elektroantrieben mit Induktionsmotoren, wobei der Induktionsmotor einen Stator (ST) mit mehreren Statorwicklungen (ST1, ST2, ST3), einen in dem Stator (ST) drehbar angeordneten Rotor und einen ferromagnetischen Kern umfasst, wobei das Verfahren die Schritte umfasst: Betreiben des Motors mit einem Hauptmagnetfeld in einem Zustand magnetischer Sättigung, wobei ein Luftspaltfluss (TF) eine räumliche Verteilung mit einem Gehalt an Oberwellen hat, der zumindest eine harmonische Komponente (T3) umfasst, die in den Statorwicklungen (ST1, ST2, ST3) harmonische Phasenspannungen (V31, V32, V33) hervorrufen, die eine Statornullspannung (VSM) oder einen -strom (ISM) bilden, Überlagern des Hauptdrehfeldes mit einem hochfrequenten Drehfeld, das erzeugt wird, indem eine Gruppe direkt oder invers symmetrischer Hochfrequenzspannungen (VHF) oder -strömen (IHF) zu den üblichen Statorphasenspannungen des Motors addiert wird, wodurch eine Veränderung des Sättigungsgrads des ferromagnetischen Kerns des Induktionsmotors verursacht und eine hochfrequente Nullkomponente (T3) des Luftspaltflusses (TF) erzeugt wird, die in den Statorwicklungen (ST1, ST2, ST3) hochfrequente harmonische Nullspannungs- (VSM) oder -stromkomponenten (ISM) hervorruft, wobei die hochfrequenten Nullspannungs- (VSM) oder -stromkomponente (ISM) Funktionen der Relativpositionen sind, die durch die zusätzliche Gruppe der hochfrequenten Spannungen (VHF) oder Ströme (IHF) und des Hauptdrehfeldes (MRF) eingenommen werden, sodass, wenn sich die zusätzliche Gruppe der Spannungen (VHF) und Ströme (IHF) mit dem Hauptdrehfeld (MRF) in Phase befindet, ein Maximum des Sättigungsgrads des ferromagnetischen Kerns des Motors einstellt, welches das Auftreten eines lokalen Minimums an der hochfrequenten Nullkomponente (T3) des Luftspaltflusses (TF) verursacht, das als lokales Maximum an den hervorgerufenen hochfrequenten Statornullspannungs- (VSM) oder -stromkomponenten (ISM) reflektiert wird; wobei sich das Verfahren weiterhin auszeichnet durch:
- Feststellen der Nullspannung oder des Nullspannungsstroms,
- Messen der Winkelstellung und/oder der Amplitude des Hauptmagnetflusses in dem Luftspalt gegenüber den hochfrequenten harmonischen Nullspannungs- oder - stromkomponenten

2. Steuerverfahren gemäß Anspruch 1, **dadurch gekennzeichnet, dass** es ferner den Schritt des Filterns und Verstärkens der Statomullphasenspannung (VSM) mittels Filter- und Verstärkungsmittel, um ein Verhältnis zwischen Signal und Rauschen zu erhalten, und die Verwendung eines Sperrfilters (EB) umfasst, der mit einem ersten Signalverarbeitungs- und Steuerblock (RC) verbunden ist, um unerwünschte hochfrequente Komponenten des Rückführkreises (FA, FP) der Stromsignale zu unterbinden.

3. Steuerverfahren gemäß Anspruch 2, **dadurch gekennzeichnet, dass** der Rückführkreis (FA, FP) zumindest eine Steuereinheit (RF) der Stromsignale, die ein Referenzsignal (VS) zu einem zweiten Verarbeitungs- und Steuerblock (BO) sendet, um einen Referenzwert (VR) bezüglich eines festen Achsensystems zu erzeugen, und eine elektronische inverterartige Vorrichtung (PWM) umfasst, die den Referenzwert (VR) empfängt, der mit der Gruppe der hochfrequenten Spannungen (VHF) addiert wurde.

4. Steuerverfahren gemäß Anspruch 3, **gekennzeichnet durch** den Schritt, in dem die Gruppe der hochfrequenten Spannungen (VHF) zu einem Spannungsreferenzsignal (VR) oder zu einem Output der Stromsteuereinheit (RF) addiert wird.

5. Steuerverfahren gemäß Anspruch 1, **dadurch gekennzeichnet, dass** es einen Schritt zum Messen der Amplitude einer Komponente (VOA) der hochfrequenten Statornullphasenspannung (VSM), die eine Frequenz aufweist, die gleich der Differenz zwischen der Frequenz des zusätzlichen Magnetfeldes, das durch die zusätzliche Gruppe hochfrequenter Spannungen (VHF) erzeugt wird, und der Frequenz des Hauptdrehfeldes (MRF) ist, und einem Schritt umfasst, um die Amplitude einer Luftspaltflusskomponente (FOA) aus der Amplitude der Komponente (VOA) der hochfrequenten Statomullphasenspannung (VSM) zu ermitteln.

6. Steuerverfahren gemäß Anspruch 5, **dadurch gekennzeichnet, dass** die Winkelstellung des Luftspaltflusses (TF) durch Integrieren der Differenz aus der Winkelfrequenz der zusätzlichen Gruppe der hochfrequenten Spannungen (VHF) und der hochfrequenten Statomullphasenspannung (VSM), die eine Frequenz besitzt, die gleich der Differenz aus der Frequenz des zusätzlichen Magnetfeldes und des Hauptdrehfeldes ist, bestimmt wird.

7. Steuerverfahren gemäß Anspruch 5, **dadurch gekennzeichnet, dass** die Winkelstellung des Luftspaltflusses (TF) durch Ermitteln der Winkelstellung der zusätzlichen Gruppe der hochfrequenten Spannungen (VHF) in den Augenblicken bestimmt wird, in denen ein Maximum, Minimum und der Nulldurchgang bei der Statomullphasenspannung (VSM) erfolgt, die eine Frequenz aufweist, die gleich der Differenz aus dem zusätzlichen Magnetfeld, das von der zusätzlichen Gruppe der hochfrequenten Spannungen (VHF) hervorgerufen wird, und der Frequenz des Hauptdrehfeldes ist.

8. Steuerverfahren gemäß Anspruch 5, **dadurch gekennzeichnet, dass** eine vollständige Statornullphasenspannung (VSM), die eine dritte harmonische Spannungskomponente und hochfrequente harmonische Komponenten umfasst, als arithmetischer Mittelwert aus den harmonischen Phasenspannungen (V31, V32, V33) erhalten wird, wobei die vollständige Statomullphasenspannung (VSM) durch Messen einer Spannung zwischen einem Sternzentrum (N) der Statorwindungen (ST1, ST2, ST3) und einem Mittelpunkt (O) erhalten wird, der zwischen zwei Kapazitäten (C1, C2) liegt, die entlang einer direkten elektrischen Stromleitung (ES) verbunden sind, die eine elektronische inverterartige Vorrichtung (PVM) versorgen.

9. Steuerverfahren gemäß Anspruch 8, **dadurch gekennzeichnet, dass** der vollständige Statomullphasenstrom (ISM) direkt durch entsprechende Sensoren oder indirekt durch Messen eines Nullspannungsabfalls an beliebigen Punkten einer Verbindungsleitung zwischen der elektronischen inverterartigen Vorrichtung (PWM) und dem Elektromotor bestimmt wird, wobei der Spannungsabfall durch Bestimmung der Spannung zwischen einem Sternzentrum (NF), das durch Verbinden eines Drei-Impedanzsterns über eine Parallelleitung zu den Versorgungsleitungen des Motors erhalten wird, und einem Mittelpunkt (O) gemessen wird, der zwischen zwei Kapazitäten (C1, C2) liegt, die entlang einer direkten elektrischen Stromleitung (DC) verbunden sind, die eine elektronische inverterartige Vorrichtung (PWM) versorgen.

## Revendications

1. Méthode de contrôle pour un moyen de commande électrique avec des moteurs à induction, dans laquelle ledit moteur à induction comprend un stator (ST) avec une pluralité d'enroulements de stator (ST1, ST2, ST3), un rotor monté pour la rotation à l'intérieur du stator (ST) et un noyau ferromagnétique, ladite méthode comprenant les étapes d'utilisation dudit moteur avec un champ magnétique principal en condition de saturation magnétique, avec un flux d'entrefer (TF) qui comprend une distribution d'espace avec un contenu harmonique comprenant au moins un composant harmonique (T3), qui induit, dans lesdits enroulements de stator (ST1, ST2, ST3), des tensions de phase harmonique (V31, V32, V33) qui forment une tension de stator homopolaire (VSM) ou un courant (ISM), superposant audit champ magnétique rotatif principal un champ magnétique rotatif à haute fréquence généré en ajoutant un ensemble de tensions de haute fréquence symétriques directes ou inverses (VHF) ou de courants (IHF) aux tensions de phase de stator standard du moteur, entraînant ainsi une variation du niveau de saturation du noyau ferromagnétique dudit moteur à induction et générant un composant homopolaire haute fréquence (T3) du flux d'entrefer (TF), qui induit, dans lesdits enroulements de stator (ST1, ST2, ST3), des composantes harmoniques de tension homopolaire haute fréquence (VSM) ou de courant (ISM), lesdits composantes harmoniques de tension homopolaire haute fréquence (VSM) ou de courant (ISM) étant fonction des positions relatives prises par ledit ensemble supplémentaire de tensions haute fréquence (VHF) ou de courants (IHF) et dudit champ magnétique rotatif principal (MRF), de telle sorte que lorsque ledit ensemble supplémentaire de tensions (VHF) ou de courants (IHF) est en phase avec le champ magnétique rotatif principal (MRF), le niveau de saturation maximal du noyau ferromagnétique du moteur est atteint, entraînant la survenue d'un minimum local sur ledit composant homopolaire haute fréquence (T3) du flux d'entrefer (TF), qui est réfléchi comme un maximum local sur lesdites composantes de tension de stator homopolaire haute fréquence (VSM) ou courant (ISM) ; la méthode étant également **caractérisée par** :
- la détection de la tension homopolaire ou du courant de tension homopolaire ;
- la mesure de la position angulaire et/ou de l'amplitude du flux magnétique principal de l'entrefer à partir des composantes harmoniques de tension ou de courant homopolaire haute fréquence.

2. Méthode de contrôle selon la revendication 1, **caractérisée en ce qu'**elle comprend également l'étape de filtrage et d'amplification de ladite tension de stator homopolaire (VSM) avec des moyens de filtrage et d'amplification, de façon à obtenir un rapport entre le signal et le bruit, et l'utilisation d'un filtre à élimination de bande (EB), qui est relié à un premier bloc de traitement et de contrôle du signal (RC) pour éliminer les composantes haute fréquence indésirables d'une boucle de rétroaction (FA, FP) des signaux de courant.

3. Méthode de contrôle selon la revendication 2, **caractérisée en ce que** ladite boucle de rétroaction (FA, FP) comprend au moins un dispositif de contrôle (RF) desdits signaux de courant, qui envoie un signal de référence (VS) à un second bloc de traitement et de contrôle (BO), de façon à générer une valeur de référence (VR), par rapport à un système à axe fixe, et un dispositif électronique de type inverseur (PWM), qui reçoit ladite valeur de référence (VR) ajoutée audit ensemble de tensions haute fréquence (VHF).

4. Méthode de contrôle selon la revendication 3, **caractérisée par** l'étape d'ajout dudit ensemble de tensions haute fréquence (VHF) à un signal de référence de tension (VR) ou à une sortie dudit dispositif de contrôle de courant (RF).

5. Méthode de contrôle selon la revendication 1, **caractérisée en ce qu'**elle comprend une étape de mesure de l'amplitude d'un composant (VOA) de ladite tension de stator homopolaire haute fréquence (VSM) avec une fréquence égale à la différence entre la fréquence dudit champ magnétique supplémentaire, générée par ledit ensemble supplémentaire de tensions haute fréquence (VHF), et la fréquence dudit champ magnétique rotatif (MRF) et une étape de détermination de l'amplitude d'un composant de flux d'entrefer (FOA) à partir de l'amplitude dudit composant (VOA) de la tension de stator homopolaire haute fréquence (VSM).

6. Méthode de contrôle selon la revendication 5, **caractérisée en ce que** la position angulaire dudit flux d'entrefer (TF) est déterminée en intégrant la différence entre la fréquence angulaire dudit ensemble supplémentaire de tensions haute fréquence (VHF) et ladite tension de stator homopolaire (VSM) ayant une fréquence égale à la différence entre la fréquence dudit champ magnétique supplémentaire et la fréquence dudit champ magnétique rotatif principal.

7. Méthode de contrôle selon la revendication 5, **caractérisée en ce que** la position angulaire dudit flux d'entrefer (TF) est déterminée en détectant la position angulaire dudit ensemble supplémentaire de tensions haute fréquence (VHF) dans les moments au cours desquels les points maximaux, minimaux et zéro surviennent dans ladite tension de stator homopolaire (VSM) avec une fréquence égale à la différence entre la fréquence dudit champ magnétique supplémentaire généré par ledit ensemble supplémentaire de tensions haute fréquence (VHF) et la fréquence dudit champ magnétique rotatif principal.

8. Méthode de contrôle selon la revendication 5, **caractérisée en ce qu'**une tension de stator homopolaire (VSM) totale, comprenant un troisième composant de tension harmonique et des composantes harmoniques haute fréquence, est obtenue comme une moyenne arithmétique desdites tensions de phase harmonique (V31, V32, V33), ladite tension de stator homopolaire totale (VSM) étant obtenue en mesurant une tension entre un centre en étoile (N) des enroulements de stator (ST1, ST2, ST3) et un point central (0) positionné entre deux condensateurs (C1, C2) reliés le long d'une ligne électrique de courant continu (BS), qui alimente un dispositif électronique du type inverseur (PWM).

9. Méthode de contrôle selon la revendication 8, **caractérisée en ce qu'**un courant de stator homopolaire total (ISM) est déterminé directement par l'intermédiaire de capteurs appropriés ou déterminé indirectement grâce à la mesure de la baisse de tension homopolaire à l'un quelconque des points d'une ligne de raccordement entre ledit dispositif électronique du type inverseur (PWM) et le moteur électrique, ladite baisse de tension étant mesurée en déterminant la tension prise entre un centre en étoile (NF), obtenue en reliant une étoile à trois impédances au travers d'une dérivation aux conducteurs d'alimentation du moteur, et un point central (0) positionné entre deux condensateurs (C1, C2) reliés le long d'une ligne électrique de courant continu (DC) qui alimente ledit dispositif électronique du type inverseur (PWM).
